# EUROPÄISCHE PATENTANMELDUNG

(11) **EP 4 574 593 A1**
(43) Veröffentlichungstag der Anmeldung: **25.06.2025**
(21) Anmeldenummer: 24218394.5
(22) Anmeldetag: 09.12.2024
(51) Int. Cl.: B60T 7/22, B60T 13/66, B60T 13/68

(54) **TRANSPORTFAHRZEUG UND VERFAHREN ZUM DURCHFÜHREN EINES BREMSMANÖVERS**

(30) Priorität: 20.12.2023 DE 102023213045; 09.01.2024 DE 102024200177
(71) Anmelder: KAMAG Transporttechnik GmbH & Co. KG, 89079 Ulm (DE)
(72) Erfinder: Riedel, Gerald, 89233 Neu-Ulm (DE)
(74) Vertreter: Ullrich & Naumann PartG mbB

(57) **Zusammenfassung**

Die Erfindung betrifft ein Transportfahrzeug, insbesondere fahrerloses Transportfahrzeug, umfassend zumindest eine Achse mit zwei Rädern, wobei jedem der zwei Räder eine Betriebsbremse und eine Federspeicherbremse zugeordnet ist, und ein mit den Betriebsbremsen und den Federspeicherbremsen fluidisch verbundenes Fluidleitungssystem mit einer Fluidversorgung, insbesondere einer Druckluftversorgung, wobei das Fluidleitungssystem zumindest zwei Relaisventile zum Druckentleeren der Federspeicherbremsen, zumindest ein Befüllventil, vorzugsweise ein Relaisventil, insbesondere ein Überlastschutzventil, zum Druckbeaufschlagen der Federspeicherbremsen und eine Stellgliedeinrichtung aufweist, wobei in einem Bremszustand, insbesondere in einem Notbremszustand, die zumindest zwei Relaisventile und das zumindest eine Befüllventil durch die Stellgliedeinrichtung derart mit einem Steuerdruck beaufschlagbar sind, dass die Federspeicherbremsen über die zumindest zwei Relaisventile druckentleerbar sind und ein Druckbeaufschlagen der Federspeicherbremsen über das zumindest eine Befüllventil verhinderbar ist. Des Weiteren ist ein Verfahren zum Durchführen eines Bremsmanövers, insbesondere eines Notbremsmanövers, mit einem Transportfahrzeug beschrieben.

## Beschreibung

Die Erfindung betrifft ein Transportfahrzeug, insbesondere fahrerloses Transportfahrzeug, umfassend zumindest eine Achse mit zwei Rädern, wobei jedem der zwei Räder eine Betriebsbremse und eine Federspeicherbremse zugeordnet ist, und ein mit den Betriebsbremsen und den Federspeicherbremsen fluidisch verbundenes Fluidleitungssystem mit einer Fluidversorgung, insbesondere einer Druckluftversorgung.

Zudem hat die vorliegende Erfindung ein Verfahren zum Durchführen eines Bremsmanövers, insbesondere eines Notbremsmanövers, mit einem Transportfahrzeug zum Gegenstand.

Transportfahrzeuge der in Rede stehenden Art sind seit Jahren aus der Praxis bekannt. Die Radbremsen der Transportfahrzeuge umfassen dabei meist Betriebs- und Federspeicherbremsen. Die Betriebsbremsen werden üblicherweise zum Abbremsen des Transportfahrzeugs während des Fahrbetriebs eingesetzt, wobei die Bremskraft der Betriebsbremsen beispielsweise über ein elektronisches Bremssystem, auch EBS genannt, regelbar ist. Zum manuellen Betätigen der Betriebsbremsen kann das Transportfahrzeug ein Fußbremspedal aufweisen.

Die Federspeicherbremsen werden bei bekannten Transportfahrzeugen üblicherweise eingesetzt, um die Räder zu blockieren und so das Transportfahrzeug gegen ein unbeabsichtigtes Wegrollen zu sichern. Dabei weisen Federspeicherbremsen jeweils ein Druckfederelement und einen mit dieser in Wirkverbindung stehenden Druckzylinder auf. Der Druckzylinder ist dabei mit einem Druck beaufschlagbar. Ist der Druckzylinder drucklos, wirkt eine durch die Druckfeder erzeugte Federkraft auf die Räder. Somit können die Bremsbeläge rein mechanisch mittels der Federkraft an die Bremsscheibe oder Bremstrommel gedrückt werden. Zum Lösen der Federspeicherbremsen wird der Druckzylinder fluidisch, beispielsweise pneumatisch oder hydraulisch, mit einem Druck beaufschlagt. Infolge des Drucks entsteht eine der Federkraft entgegengesetzte Lösekraft, durch die wiederum die Druckfeder zusammengedrückt und die auf die Räder wirkende Federkraft, insbesondere bis auf null, reduziert werden kann. Die Federspeicherbremsen können manuell, insbesondere per Hand oder Fuß, oder elektronisch betätigt werden.

Ein sicherer Betrieb, insbesondere ein möglichst schnelles und zuverlässiges Abbremsen vor Hindernissen, von Transportfahrzeugen sollte jederzeit gewährleistet sein. Dies gilt besonders für einen Betrieb von fahrerlosen Transportfahrzeugen auf Logistikhöfen, wobei fahrerlose Transportfahrzeuge erhöhten Sicherheitsanforderungen unterliegen. Federspeicherbremsen weisen eine besonders hohe Ausfallsicherheit auf, da diese bei einem Ausfall der Druckbeaufschlagung der Druckzylinder trotzdem wirken. Daher können Federspeicherbremsen auch als Notbremse von Transportfahrzeugen eingesetzt werden.

Der vorliegenden Erfindung liegt daher die Aufgabe zugrunde, ein Transportfahrzeug, insbesondere ein fahrerloses Transportfahrzeug, der eingangs genannten Art derart auszugestalten und weiterzubilden, dass mit konstruktiv einfachen Mitteln ein zuverlässiges und schnelles Abbremsen ermöglicht ist. Des Weiteren soll ein Verfahren zum zuverlässigen und schnellen Durchführen eines Bremsmanövers angegeben werden.

Erfindungsgemäß wird die voranstehende Aufgabe durch die Merkmale des Anspruches 1 gelöst. Danach betrifft die Erfindung ein Transportfahrzeug, insbesondere fahrerloses Transportfahrzeug, umfassend zumindest eine Achse mit zwei Rädern, wobei jedem der zwei Räder eine Betriebsbremse und eine Federspeicherbremse zugeordnet ist, und ein mit den Betriebsbremsen und den Federspeicherbremsen fluidisch verbundenes Fluidleitungssystem mit einer Fluidversorgung, insbesondere einer Druckluftversorgung, wobei das Fluidleitungssystem zumindest zwei Relaisventile zum Druckentleeren der Federspeicherbremsen, zumindest ein Befüllventil, vorzugsweise ein Relaisventil, insbesondere ein Überlastschutzventil, zum Druckbeaufschlagen der Federspeicherbremsen und eine Stellgliedeinrichtung aufweist, wobei in einem Bremszustand, insbesondere in einem Notbremszustand, die zumindest zwei Relaisventile und das zumindest eine Befüllventil durch die Stellgliedeinrichtung derart mit einem Steuerdruck beaufschlagbar sind, dass die Federspeicherbremsen über die zumindest zwei Relaisventile druckentleerbar sind und ein Druckbeaufschlagen der Federspeicherbremsen über das zumindest eine Befüllventil verhinderbar ist.

In erfindungsgemäßer Weise ist zunächst erkannt worden, dass durch eine Funktionstrennung, wobei die zumindest zwei Relaisventile zum Druckentleeren der Federspeicherbremsen und das zumindest eine Befüllventil zum Druckbeaufschlagen der Federspeicherbremsen einsetzbar sind, die zugrundeliegende Aufgabe auf einfache Weise gelöst werden kann. Dabei sind die zumindest zwei Relaisventile und das zumindest eine Befüllventil durch die Stellgliedeinrichtung in dem Bremszustand gleichzeitig ansteuerbar, wobei das Ansteuern durch das Beaufschlagen dieser mit dem Steuerdruck erfolgt. Dadurch wird das Druckbeaufschlagen der Federspeicherbremsen über das zumindest eine Befüllventil im Bremszustand, also während die Federspeicherbremsen über die zumindest zwei Relaisventile druckentleeren, verhindert. Somit können die zumindest zwei Relaisventile beim Druckentleeren nicht gegeneinander arbeiten und ein kurzer Bremsweg sichergestellt werden.

Der Ausdruck "derart mit einem Steuerdruck beaufschlagbar" ist im Rahmen dieser Offenbarung im weitesten Sinn zu verstehen und umfasst ein Verringern des Steuerdrucks, insbesondere auf 0 bar bzw. Umgebungsdruck, was einem Entlüften entspricht, sowie ein Erhöhen des Steuerdrucks, insbesondere über einen definierten oder gewählten Grenzwert.

Bei dem Transportfahrzeug kann es sich beispielsweise um ein Transportfahrzeug zur Nutzung in der Hafenlogistik, der Hoflogistik oder in der Intralogistik in der Industrie, bzw. generell um ein Transportfahrzeug für beliebige Material- und Warenflüsse innerhalb eines Betriebsgeländes handeln. Beispielsweise kann das Transportfahrzeug als ein Wechselbrückenhubwagen ausgebildet sein. Dabei wird darauf hingewiesen, dass ein Rad als Einzel- oder als Doppelbereifung ausgeführt sein kann.

Der Ausdruck "fahrerloses Transportfahrzeug" beschreibt im Rahmen dieser Offenbarung ein automatisiert fahrendes Transportfahrzeug, welches automatisch gesteuert und geführt wird und dem Zweck der Bewegung von Gütern dient.

Bei dem Fluidleitungssystem kann es sich vorzugsweise um ein pneumatisches Fluidleitungssystem mit Luft als Fluid handeln. Ein hydraulisches Fluidleitungssystem mit einem flüssigen Medium, beispielswiese Hydrauliköl, als Fluid ist denkbar. Die Ausdrücke "Druckbeaufschlagen der Federspeicherbremsen" und "Druckentleeren der Federspeicherbremsen" beschreiben im Rahmen dieser Offenbarung ein Beaufschlagen der Druckzylinder der Federspeicherbremsen mit einem Fluiddruck bzw. ein Entleeren des Fluiddrucks der Druckzylinder der Federspeicherbremsen.

Der Ausdruck "Stellgliedeinrichtung" beschreibt im Rahmen dieser Offenbarung eine Einrichtung zum Modulieren eines Fluiddrucks der Fluidversorgung in den Steuerdruck. Dabei kann der Fluiddruck durch die Stellgliedeinrichtung stufenlos und/oder stufenweise, insbesondere zweistufig, beispielsweise auf einen Wert von 0 bar bzw. Umgebungsdruck und einen Wert größer als 0 bar bzw. Umgebungsdruck, modulierbar sein. Insbesondere kann die Stellgliedeinrichtung dabei einen Durchfluss durch die Fluidleitung absperren und freigeben. Mit anderen Worten kann der Steuerdruck dem Fluiddruck der Fluidversorgung (sog. Systemdruck) entsprechen, wenn der Durchfluss durch die Fluidleitung bzw. die Stellgliedeinrichtung freigegeben ist.

Der Ausdruck "Relaisventil" beschreibt im Rahmen dieser Offenbarung ein Ventil zumindest umfassend einen Steueranschluss zum Schalten einer Ventilstellung des Relaisventils, einen Arbeitsanschluss sowie einen Fluidablass, beispielsweise eine Entlüftungsöffnung. Dabei ist der Steueranschluss mit dem Steuerdruck beaufschlagt. Der Steueranschluss erlaubt keinen Durchfluss des am Steueranschluss anstehenden Fluids durch das Relaisventil hindurch. Der Fluidablass der zumindest zwei Relaisventile erlaubt ein besonders schnelles Druckentleeren der Federspeicherbremsen. Des Weiteren kann das Relaisventil einen Fluidversorgungsanschluss aufweisen. Die Ventilstellung kann über den Steuerdruck derart geschaltet werden, dass im Bremszustand bei einem Steuerdruck unterhalb eines definierten oder gewählten Grenzwerts ein Druckentleeren eines an den Arbeitsanschluss angeschlossenen Fluidleitungsabschnitts über den Fluidablass ermöglicht und bei einem Steuerdruck oberhalb dieses Grenzwerts verhindert ist. Es kann sich hierbei um Standardrelaisventile handeln, die üblicherweise in der Pneumatik eingesetzt werden. Insbesondere ist denkbar, dass zumindest eines der Relaisventile als Überlastschutzventil ausgebildet ist. Aufgrund einer besseren Druckentleerungscharakteristik eines als Überlastschutzventil ausgebildeten Relaisventils, welches auch als Überlastschutzrelaisventil bezeichnet werden kann, kann eine schnellere Druckentleerung und somit ein schnelleres Auslösen der Bremsung über die Federspeicherbremsen erfolgen. Es kann sich hierbei um Standardüberlastschutzventile handeln, die üblicherweise in der Pneumatik eingesetzt werden.

Somit sind die Ventilstellungen der zumindest zwei Relaisventile durch das Beaufschlagen der Steueranschlüsse mit dem Steuerdruck derart schaltbar, dass die Federspeicherbremsen, welche fluidisch mit den Arbeitsanschlüssen verbunden sind, über die Fluidablässe druckentleerbar sind. Dabei ist es vorteilhaft, die zumindest zwei Relaisventile möglichst ortsnah zu den Federspeicherbremsen anzuordnen, um ein möglichst schnelles Druckentleeren und möglichst kurze Bremswege zu ermöglichen.

Der Ausdruck "Befüllventil" beschreibt im Rahmen dieser Offenbarung ein Ventil zumindest umfassend einen Fluidversorgungsanschluss zum Verbinden mit der Fluidversorgung und einen Arbeitsanschluss, über den die Federspeicherbremsen mit Fluid aus der Fluidversorgung druckbeaufschlagbar sind. Dabei ist der Fluidversorgungsanschluss mit dem Steuerdruck beaufschlagt. Der Fluidversorgungsanschluss erlaubt einen Durchfluss des am Fluidversorgungsanschluss anstehenden Fluids durch das Befüllventil hindurch. Durch das Befüllventil sind die Federspeicherbremsen somit mit einem Fluiddruck beaufschlagbar, der dem Steuerdruck entspricht. Dieser Fluiddruck ist mindestens so groß wie ein Haltedruck der Federspeicherbremsen, der erforderlich ist, die Druckfedern entgegen ihrer Federkraft zusammenzudrücken und die Federspeicherbremsen zu lösen. Der Haltedruck kann somit auch als Lösedruck bezeichnet werden. Um eine möglichst geringe Auslösezeit im Bremszustand und damit einen möglichst geringen Bremsweg zu erreichen, kann der die Federspeicherbremsen beaufschlagende Fluiddruck, insbesondere auch der Fluiddruck der Fluidversorgung, im Wesentlichen dem Haltedruck bzw. Lösedruck der Federspeicherbremsen entsprechen. Eine Differenz zwischen dem die Federspeicherbremsen beaufschlagenden Fluiddruck, insbesondere dem Fluiddruck der Fluidversorgung, und dem Haltedruck bzw. Lösedruck der Federspeicherbremsen kann vorzugsweise kleiner oder gleich 1 bar, weiter bevorzugt kleiner oder gleich 0,5 bar, am meisten bevorzugt kleiner oder gleich 0,1 bar sein. Das mindestens eine Befüllventil ist derart ausgebildet, dass bei einer Beaufschlagung des Fluidversorgungsanschlusses mit einem Steuerdruck oberhalb eines definierten oder gewählten Grenzwerts ein Durchfluss des Fluids vom Fluidversorgungsanschluss durch das Befüllventil hindurch und aus dem Arbeitsanschluss heraus ermöglicht ist. Unterhalb dieses Grenzwerts ist ein Durchfluss verhindert. Dazu kann das Befüllventil ein Rückschlagventil aufweisen. Es wird darauf hingewiesen, dass der Betrag des Steuerdrucks dem Fluiddruck der Fluidversorgung entsprechen kann, wobei der Fluiddruck der Fluidversorgung oberhalb des Grenzwerts liegen kann.

Mit anderen Worten entweicht somit im Bremszustand das in den Federspeicherbremsen gespeicherte Fluid über die Fluidablässe der zumindest zwei Relaisventile, wodurch sich der Fluiddruck in den Federspeicherbremsen abbaut und die Federkraft auf die Räder wirkt. Das Fahrzeug wird somit abgebremst. Gleichzeitig wird dabei verhindert, dass Fluid über das zumindest eine Befüllventil zu den Federspeicherbremsen gelangt.

Der Steuerdruck beaufschlagt dabei die Steueranschlüsse der zumindest zwei Relaisventile und den Fluidversorgungsanschluss des zumindest einen Befüllventils. Bei dem das zumindest eine Befüllventil beaufschlagenden Steuerdruck kann es sich somit um einen Fülldruck der Federspeicherbremsen handeln.

Es ist denkbar, dass das Befüllventil, insbesondere bei einem automatisiert fahrenden Transportfahrzeug für einen durch einen Fahrer begleiteten Assistenzfahrbetrieb, einen oder mehrere Steueranschlüsse zum Anschluss eines den Betriebsbremsen und/oder einer manuellen Betätigungseinrichtung für die Federspeicherbremsen zugeordneten Fluidleitungsabschnitts, beispielsweise eine Feststellbremse, aufweist. Dazu kann das Befüllventil als Überlastschutzventil ausgebildet sein. Die Fluidleitungsabschnitte, die den Betriebsbremsen und der manuellen Betätigungseinrichtung für die Federspeicherbremsen zugeordnet sind, können dabei derart an das Überlastschutzventil angeschlossen sein, dass eine Überbelastung der Radbremsen bei einer gleichzeitigen, insbesondere manuellen, Betätigung der Betriebs- und der Federspeicherbremsen verhindert ist. Es kann sich hierbei um Standardüberlastschutzventile handeln, die üblicherweise in der Pneumatik eingesetzt werden.

Zudem ist denkbar, dass, insbesondere infolge einer manuellen Betätigung der Betriebsbremsen durch den Fahrer, die zumindest zwei Relaisventile und das zumindest eine Befüllventil durch die Stellgliedeinrichtung derart mit einem Steuerdruck beaufschlagbar sind, dass die Federspeicherbremsen über das zumindest eine Befüllventil druckbeaufschlagbar sind und ein Druckentleeren der Federspeicherbremsen über die zumindest zwei Relaisventile verhinderbar ist. Dadurch wird der Bremszustand der Federspeicherbremsen aufgehoben und es kann eine Überbelastung der Radbremsen verhindert werden. Die manuelle Betätigung der Betriebsbremsen kann beispielsweise durch einen Drucksensor und eine Steuereinrichtung erkannt werden, wobei der Drucksensor in dem den Betriebsbremsen zugeordneten Fluidleitungsabschnitt angeordnet sein kann. Im Anschluss an die Erkennung der manuellen Betätigung der Betriebsbremsen kann durch die Steuereinrichtung ein entsprechendes Steuersignal an die Stellgliedeinrichtung übermittelt werden.

In vorteilhafter Weise kann die Stellgliedeinrichtung zwischen der Fluidversorgung und den zumindest zwei Relaisventilen sowie zwischen der Fluidversorgung und dem zumindest einen Befüllventil angeordnet sein. Dadurch ist ein Fluiddruck der Fluidversorgung auf einfache Weise durch die Stellgliedeinrichtung in den Steuerdruck modulierbar.

In weiter vorteilhafter Weise kann der Steuerdruck durch die Stellgliedeinrichtung zum Druckentleeren und zum Verhindern des Druckbeaufschlagens der Federspeicherbremsen unter einen Grenzwert, insbesondere auf 0 bar bzw. Umgebungsdruck, absenkbar und zum Druckbeaufschlagen der Federspeicherbremsen über den Grenzwert anhebbar sein. Somit kann eine komplexe Regelung des Steuerdrucks vermieden werden und eine Stellgliedeinrichtung mit einer einfachen und zuverlässigen Konstruktion eingesetzt werden. Durch das Absenken des Steuerdrucks unter den Grenzwert kann jeweils die Ventilstellung der zumindest zwei Relaisventile derart geschaltet werden, dass ein Druckentleeren über die Fluidablässe erfolgen kann. Durch das Anheben des Steuerdrucks oberhalb eines definierten oder gewählten Grenzwerts kann die jeweilige Ventilstellung derart geschaltet werden, dass ein Durchlass zum Fluidablass geschlossen und somit ein Druckentleeren über den Fluidablass verhindert ist.

Gemäß einer vorteilhaften Weiterbildung kann die Stellgliedeinrichtung zum Absenken des Steuerdrucks stromlos schaltbar und zum Anheben des Steuerdrucks bestrombar sein. Dadurch kann ein besonders zuverlässiges Abbremsen des Transportfahrzeugs ermöglicht werden. Denn bei einer Unterbrechung der Stromversorgung in einem Schadensfall wird so automatisch der Steuerdruck abgesenkt, was zu einer Druckentleerung der Federspeicherbremsen und damit zu einem Abbremsen des Transportfahrzeugs führt.

Es kann des Weiteren vorteilhaft sein, dass die Stellgliedeinrichtung mehrere Stellglieder, insbesondere elektronisch steuerbare Magnetventile, vorzugsweise mit einer Fluidablassöffnung, umfasst. Dadurch wird eine redundante Ausführung der Stellgliedeinrichtung bereitgestellt, wobei im Fall eines Ausfalls eines Stellglieds eines oder mehrere übrige Stellglieder weiter funktionsfähig sind. Somit ist ein zuverlässiges Abbremsen möglich. Sicherheitsanforderungen, die an automatisiert fahrende Transportfahrzeuge gestellt sind, können so erfüllt werden. Jedes Magnetventil weist einen Fluidversorgungsanschluss und einen Arbeitsanschluss auf. Ein elektronisch steuerbares Magnetventil ist besonders einfach durch ein elektrisches Signal steuerbar. Ist das Magnetventil stromlos, ist die Fluidleitung abgesperrt und ein Durchfluss durch das Magnetventil, insbesondere von der Fluidversorgung zu den zumindest zwei Relaisventilen und dem zumindest einen Befüllventil, ist verhindert. Durch die Fluidablassöffnungen der Stellglieder kann Fluid aus den Fluidleitungen entweichen. Dadurch senkt sich der Steuerdruck, insbesondere bis auf 0 bar bzw. Umgebungsdruck, ab und die Federspeicherbremsen werden druckentleert.

Des Weiteren ist denkbar, dass den zumindest zwei Relaisventilen und/oder dem zumindest einen Befüllventil jeweils zumindest ein Stellglied, vorzugsweise jeweils zwei in Reihe geschaltete Stellglieder, zugeordnet sind. Dadurch kann die Redundanz und damit die Zuverlässigkeit des Systems weiter erhöht werden. Dabei ist denkbar, dass jedem Relaisventil und/oder jedem Befüllventil eines oder mehrere Stellglieder zugeordnet sind. Dadurch kann jedes Relaisventil und/oder jedes Befüllventil durch die Stellglieder getrennt angesteuert werden. Dies ermöglicht es, die Funktionsfähigkeit des Systems, insbesondere ein ordnungsgemäßes Ansteuern des jeweiligen Relaisventils und/oder Befüllventils durch das jeweils zugeordnete Stellglied, zu prüfen.

In weiter vorteilhafter Weise können die zumindest zwei Relaisventile, das zumindest eine Befüllventil und die Federspeicherbremsen über einen Druckentleerungsleitungsabschnitt des Fluidleitungssystem fluidisch verbunden sein. Im Fall einer Fehlfunktion eines oder mehrerer Relaisventile, bei welcher diese nicht ordnungsgemäß zum Druckentleeren schaltbar sind, sind weiterhin alle Federspeicherbremsen über die übrigen, funktionsfähigen Relaisventile druckentleerbar. Somit kann die Redundanz und damit die Zuverlässigkeit des Systems weiter erhöht werden.

Zum Erfassen eines den Federspeicherbremsen zugeordneten Fluiddrucks kann der Druckentleerungsleitungsabschnitt eine erste Druckerfassungseinrichtung, insbesondere umfassend zumindest einen Druckschalter und/oder zumindest einen Drucksensor, aufweisen. Anhand des erfassten Fluiddrucks kann die ordnungsgemäße Funktionsfähigkeit der zumindest zwei Relaisventile und des zumindest einen Befüllventils geprüft werden und beurteilt werden, ob die Federspeicherbremsen druckentleert oder druckbeaufschlagt sind. Durch einen Druckschalter kann eine kostengünstige Druckerfassungseinrichtung bereitgestellt werden. Ein Drucksensor ermöglicht eine Erfassung des Fluiddrucks mit einer hohen Genauigkeit.

Zum Erfassen eines den Federspeicherbremsen zugeordneten Fluiddrucks können die zumindest zwei Relaisventile an einen Diagnoseleitungsabschnitt des Fluidleitungssystems angeschlossen sein, wobei der Diagnoseleitungsabschnitt eine zweite Druckerfassungseinrichtung, insbesondere umfassend zumindest einen Druckschalter und/oder zumindest einen Drucksensor, aufweist. Dabei kann der Anschluss jeweils über einen Fluidversorgungsanschluss des Relaisventils erfolgen, der mit dem Arbeitsanschluss fluidisch in Verbindung steht. Anhand des erfassten Fluiddrucks kann die ordnungsgemäße Funktionsfähigkeit der zumindest zwei Relaisventile (und gegebenenfalls des zumindest einen Befüllventils) geprüft werden und beurteilt werden, ob die Federspeicherbremsen druckentleert oder druckbeaufschlagt sind. Dabei sind die zumindest zwei Relaisventile und das zumindest eine Befüllventil über einen einzigen Druckschalter oder Drucksensor überprüfbar. Dadurch können sowohl die Überprüfung vor einer Inbetriebnahme des Transportfahrzeugs vereinfacht als auch die Überprüfungsdauer deutlich reduziert werden.

Zum Erfassen des Steuerdrucks, insbesondere des zumindest einen Befüllventils, kann das Fluidleitungssystem eine dritte Druckerfassungseinrichtung, insbesondere umfassend zumindest einen Druckschalter und/oder zumindest einen Drucksensor, aufweisen, wobei die dritte Druckerfassungseinrichtung zwischen der Stellgliedeinrichtung und dem zumindest einen Befüllventil angeordnet ist. Insbesondere kann die dritte Druckerfassungseinrichtung dabei zwischen den dem zumindest einen Befüllventil zugeordneten Stellgliedern und dem zumindest einen Befüllventil angeordnet sein. Anhand des erfassten Steuerdrucks kann geprüft werden, ob die Stellgliedeinrichtung ordnungsgemäß funktioniert. Alternativ oder zusätzlich ist denkbar, eine solche Druckerfassungseinrichtung zwischen der Stellgliedeinrichtung und den zumindest zwei Relaisventilen zum Erfassen des Steuerdrucks anzuordnen.

Zudem ist denkbar, dass die zumindest zwei Relaisventile derart angeschlossen sind, dass die Federspeicherbremsen über die zumindest zwei Relaisventile nicht druckbeaufschlagbar sind. Dazu können Fluidversorgungsanschlüsse der zumindest zwei Relaisventile nicht an die Fluidversorgung angeschlossen sein. Beispielsweise können die Fluidversorgungsanschlüsse dauerhaft abgesperrt sein oder an den Diagnoseleitungsabschnitt angeschlossen sein. Dadurch kann ein Druckbeaufschlagen der Federspeicherbremsen durch die Relaisventile, insbesondere bei einer Fehlfunktion, sicher verhindert werden und ein besonders zuverlässiges Abbremsen ermöglicht werden.

In weiter vorteilhafter Weise können zumindest zwei Achsen, umfassend eine Vorder- und eine Hinterradachse, mit jeweils zwei Rädern angeordnet sein, wobei jedem Rad eine Betriebsbremse und eine Federspeicherbremse zugeordnet ist. Dadurch kann ein besonders kurzer Bremsweg erzielt werden.

Gemäß einer weiteren vorteilhaften Weiterbildung können die Betriebsbremsen und die Federspeicherbremsen je Rad als eine Bremszylindereinheit, insbesondere als Kombibremszylinder, ausgeführt sein. Eine Bremszylindereinheit stellt eine besonders platzsparende und robuste Bauweise dar.

Gemäß einer weiteren vorteilhaften Weiterbildung kann ein den Betriebsbremsen zugeordnetes, elektronisches Bremssystem in dem Bremszustand deaktiviert sein. Dadurch kann auf zuverlässige Weise eine Überbelastung der Radbremsen infolge einer gleichzeitigen Betätigung der Betriebs- und der Federspeicherbremsen verhindert werden.

Es ist zudem denkbar, dass das Transportfahrzeug mindestens einen Umgebungssensor zum Erfassen von Umgebungsdaten und eine Steuereinrichtung aufweist. Der mindestens eine Umgebungssensor kann insbesondere zum Erfassen eines Hindernisses im Fahrweg des Transportfahrzeugs ausgebildet sein. Der mindestens eine Umgebungssensor kann ein Kamerasystem und/oder einen 2D-Scanner oder einen 3D-Scanner, beispielsweise einen Laser-Scanner, einen Lidar-Scanner oder einen Radar-Scanner, umfassen. Die Steuereinrichtung kann ausgebildet sein, die durch den mindestens einen Umgebungssensor erfassten Umgebungsdaten auszuwerten, eine Bremssituation zu erkennen und daraufhin ein Bremssignal an die Stellgliedeinrichtung zu übermitteln. Dabei ist eine Übermittlung über eine physische Verbindung, insbesondere eine elektrische Leitung, oder über eine drahtlose Verbindung, insbesondere eine Funkverbindung, denkbar. Infolge des Bremssignals kann somit der Bremszustand, insbesondere der Notbremszustand, initiiert werden. Es ist denkbar, dass das Bremssignal einem Bereitstellen oder einem Unterbinden einer Stromversorgung der Stellgliedeinrichtung entspricht.

Die zugrundeliegende Aufgabe ist des Weiteren durch ein Verfahren zum Durchführen eines Bremsmanövers, insbesondere eines Notbremsmanövers, mit einem Transportfahrzeug nach einem der Ansprüche 1 bis 13, mit den Merkmalen des nebengeordneten Anspruchs 14 gelöst. Danach weist das Transportfahrzeug mindestens einen Umgebungssensor zum Erfassen von Umgebungsdaten und eine Steuereinrichtung auf. Das Verfahren zum Durchführen eines Bremsmanövers umfasst die Schritte:
- Erkennen einer Bremssituation durch den mindestens einen Umgebungssensor und die Steuereinrichtung;
- Übermitteln eines Bremssignals durch die Steuereinrichtung an die Stellgliedeinrichtung;
- Beaufschlagen der zumindest zwei Relaisventile und des zumindest einen Befüllventils mit dem Steuerdruck durch die Stellgliedeinrichtung;
- Druckentleeren der Federspeicherbremsen über die zumindest zwei Relaisventile;
- Verhindern des Druckbeaufschlagens der Federspeicherbremsen über das zumindest eine Befüllventil.

Hinsichtlich des Verfahrens ist in erfindungsgemäßer Weise erkannt worden, dass ein besonders zuverlässiges und schnelles Abbremsen durch das Anordnen mindestens eines Umgebungssensors und einer Steuereinrichtung an dem Transportfahrzeug erreicht werden kann. Der mindestens eine Umgebungssensor kann dabei wie oben beschrieben ausgebildet sein. Anhand der Steuereinrichtung werden die durch den mindestens einen Umgebungssensor erfassten Umgebungsdaten ausgewertet und gegebenenfalls eine Bremssituation erkannt. Im Anschluss an das Erkennen der Bremssituation übermittelt die Steuereinrichtung ein Bremssignal an die Stellgliedeinrichtung. Infolge des Bremssignals werden die zumindest zwei Relaisventile und das zumindest eine Befüllventil durch die Stellgliedeinrichtung mit dem Steuerdruck derart beaufschlagt, dass die Federspeicherbremsen über die zumindest zwei Relaisventile druckentleert werden und ein Druckbeaufschlagen der Federspeicherbremsen über das zumindest eine Befüllventil verhindert wird. Dabei werden die jeweiligen Ventilstellungen der zumindest zwei Relaisventile durch den Steuerdruck so geschaltet, dass die Federspeicherbremsen über die Fluidablässe druckentleert werden, d.h. das in den Federspeicherbremsen gespeicherte Fluid über die Fluidablässe der zumindest zwei Relaisventile entweicht.

Der Steuerdruck bzw. Systemdruck beaufschlagt dabei die Steueranschlüsse der zumindest zwei Relaisventile und den Fluidversorgungsanschluss des zumindest einen Befüllventils. Bei dem das zumindest eine Befüllventil beaufschlagenden Steuerdruck bzw. Systemdruck kann es sich somit um einen Fülldruck der Federspeicherbremsen handeln.

Das erfindungsgemäße Transportfahrzeug kann verfahrensgemäß geprägte Merkmale aufweisen, so dass das erfindungsgemäße Verfahren die in den Ansprüchen, der voranstehenden allgemeinen Beschreibung sowie der nachstehenden Figurenbeschreibung enthaltenen Merkmale und die damit erreichten Vorteile des erfindungsgemäßen Transportfahrzeugs aufweisen kann.

In vorteilhafter Weise kann ein den Betriebsbremsen zugeordnetes, elektronisches Bremssystem in dem Bremszustand, insbesondere vor dem Übermitteln des Bremssignals durch die Steuereinrichtung an die Stellgliedeinrichtung, deaktiviert werden. Dadurch kann auf zuverlässige Weise eine Überbelastung der Radbremsen infolge einer gleichzeitigen Betätigung der Betriebs- und der Federspeicherbremsen verhindert werden.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. Zur besseren Übersichtlichkeit sind die Anschlüsse der Magnetventile, der Relaisventile und der Befüllventile jeweils einmalig pro Figur mit römischen Zahlen nummeriert, wobei die römischen Zahlen den in der Praxis verwendeten arabischen Zahlen entsprechen. Die in den Figuren angegebenen Druckwerte entsprechen einer vorteilhaften Ausgestaltung, jedoch sind andere Werte denkbar. In der Zeichnung zeigen
- Fig. 1: in einer schematischen Darstellung ein Fluidleitungssystem eines Transportfahrzeugs gemäß einer Ausführungsform der vorliegenden Erfindung,
- Fig. 2: in einer schematischen Darstellung ein Fluidleitungssystem eines Transportfahrzeugs gemäß einer weiteren Ausführungsform der vorliegenden Erfindung,
- Fig. 3: in einer schematischen Darstellung ein Fluidleitungssystem eines Transportfahrzeugs gemäß einer weiteren Ausführungsform der vorliegenden Erfindung,
- Fig. 4: in einer schematischen Darstellung ein Fluidleitungssystem eines Transportfahrzeugs gemäß einer weiteren Ausführungsform der vorliegenden Erfindung,
- Fig. 5: Schritte eines Verfahrens gemäß einer Ausführungsform der vorliegenden Erfindung und
- Fig. 6: in einer schematischen Darstellung eine Seitenansicht eines Transportfahrzeugs gemäß einer Ausführungsform der vorliegenden Erfindung.

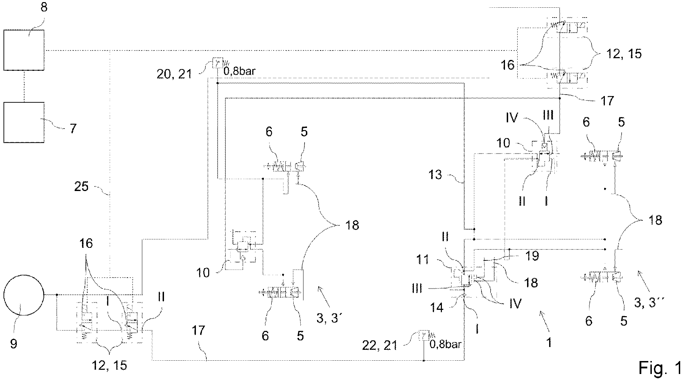

Fig. 1 zeigt in einer schematischen Darstellung ein Fluidleitungssystem eines Transportfahrzeugs gemäß einer Ausführungsform der vorliegenden Erfindung.

Das in dem Fig. 1 dargestellte Fluidleitungssystem 1 ist Teil eines automatisiert fahrenden Transportfahrzeugs 2 mit zwei Achsen 3, umfassend eine Vorderradachse 3' und eine Hinterradachse 3", und wird mit Luft betrieben. Jede Achse 3 weist zwei Räder 4 auf, wobei jedem der zwei Räder 4 eine Betriebsbremse 5 und eine Federspeicherbremse 6 zugeordnet ist. Somit weist jede Achse 3 zwei Betriebsbremsen 5 und zwei Federspeicherbremsen 6 auf. Die Betriebsbremsen 5 und die Federspeicherbremsen 6 sind jeweils als Kombibremszylinder ausgeführt, die fluidisch mit dem Fluidleitungssystem 1 verbunden sind.

Zum Erkennen einer Bremssituation und Initiieren eines Notbremsmanövers weist das Transportfahrzeug 2 einen Umgebungssensor 7 und eine Steuereinrichtung 8 auf.

Das Fluidleitungssystem 1 umfasst zudem eine Fluidversorgung 9 in Form einer Druckluftversorgung, zwei Relaisventile 10 zum Druckentleeren der Federspeicherbremsen 6, ein Befüllventil 11 zum Druckbeaufschlagen der Federspeicherbremsen 6 und eine Stellgliedeinrichtung 12. In dem Notbremszustand sind die zwei Relaisventile 10 und das Befüllventil 11 durch die Stellgliedeinrichtung 12 derart mit einem Steuerdruck beaufschlagbar, dass die Federspeicherbremsen 6 über die zwei Relaisventile 10 druckentleerbar sind und ein Druckbeaufschlagen der Federspeicherbremsen 6 über das Befüllventil 11 verhinderbar ist. Dabei ist der Steuerdruck durch die Stellgliedeinrichtung 12 auf 0 bar bzw. Umgebungsdruck verringerbar und über einen definierten oder gewählten Grenzwert erhöhbar.

Jedes Relaisventil 10 weist dabei einen Steueranschluss IV zum Schalten einer Ventilstellung des Relaisventils 10, einen Arbeitsanschluss II, einen Fluidversorgungsanschluss I sowie einen Fluidablass III in Form einer Entlüftungsöffnung auf. Die Ventilstellung ist über den am Steueranschluss IV anstehenden Steuerdruck derart schaltbar, dass im Bremszustand bei einem Steuerdruck unterhalb eines definierten oder gewählten Grenzwerts ein Druckentleeren eines an den Arbeitsanschluss II angeschlossenen Druckentleerungsleitungsabschnitts 13 über den Fluidablass III ermöglicht und bei einem Steuerdruck oberhalb dieses Grenzwerts verhindert ist. Der Fluidversorgungsanschluss I ist in diesem Ausführungsbeispiel nicht mit der Fluidversorgung 9 verbunden, sondern dauerhaft abgesperrt. Somit ist ein Druckbeaufschlagen der Federspeicherbremsen 6 nicht über die Relaisventile 10 möglich. Die Relaisventile 10 sind an der Hinterradachse 3" und an der Vorderradachse 3' positioniert.

Das Befüllventil 11 ist dabei als Überlastschutzventil 11 ausgeführt und umfasst einen Fluidversorgungsanschluss I, einen Arbeitsanschluss II sowie zwei Steueranschlüsse IV. Das Überlastschutzventil 11 ist derart ausgebildet, dass bei einer Beaufschlagung des Fluidversorgungsanschlusses I mit einem Steuerdruck oberhalb eines definierten oder gewählten Grenzwerts ein Durchfluss des Fluids von dem Fluidversorgungsanschluss I durch das Überlastschutzventil 11 hindurch und aus dem Arbeitsanschluss II heraus ermöglicht ist. Unterhalb dieses Grenzwerts ist ein Durchfluss durch ein Rückschlagventil 14 verhindert.

Die Stellgliedeinrichtung 12 umfasst vier elektronisch steuerbare Magnetventile 15 mit je einem Fluidversorgungsanschluss I, einem Arbeitsanschluss II und einer Fluidablassöffnung 16. Diese sind zwischen der Fluidversorgung 9 und den zwei Relaisventilen 10 sowie zwischen der Fluidversorgung 9 und dem Überlastschutzventil 11 angeordnet. Dabei sind jeweils zwei in Reihe geschaltete Magnetventile 15 den zwei Relaisventilen 10 und dem Überlastschutzventil 11 zugeordnet. Der Steuerdruck ist durch die Magnetventile 15 zum Druckentleeren und zum Verhindern des Druckbeaufschlagens der Federspeicherbremsen 6 auf 0 bar bzw. Umgebungsdruck absenkbar und zum Druckbeaufschlagen der Federspeicherbremsen 6 über einen Grenzwert anhebbar. Der Grenzwert kann von der Bauart der Relaisventile 10 und/oder des Überlastschutzventils 11 abhängen. Die Magnetventile 15 sind dabei zum Absenken des Steuerdrucks stromlos schaltbar und zum Anheben des Steuerdrucks bestrombar.

Die Relaisventile 10 sind jeweils über den Steueranschluss IV mit der Fluidversorgung 9 und das Überlastschutzventil 11 über den Fluidversorgungsanschluss I mit der Fluidversorgung 9 verbunden. Die Magnetventile 15 sind zwischen der Fluidversorgung 9 und den zwei Relaisventilen 10 sowie zwischen der Fluidversorgung 9 und dem Überlastschutzventil 11 angeordnet. Ein Fluiddruck der Fluidversorgung 9 ist durch die Magnetventile 15 in den Steuerdruck umsetzbar, beispielsweise indem die Fluidleitungen durch die Magnetventile 15 bei Bedarf absperrbar oder freigebbar sind.

Die zwei Relaisventile 10, das Überlastschutzventil 11 und die Federspeicherbremsen 6 sind über den Druckentleerungsleitungsabschnitt 13 des Fluidleitungssystem 1 fluidisch verbunden.

Nach Erkennen einer Bremssituation wird ein Bremssignal durch die Steuereinrichtung 8 über eine Drahtleitung 25 an die Magnetventile 15 übermittelt. Das Bremssignal entspricht dabei einem Unterbinden einer Stromversorgung der Magnetventile 15, d.h. die Magnetventile 15 werden stromlos geschaltet. Infolgedessen wird die Fluidzufuhr zu den Relaisventilen 10 und dem Überlastschutzventil 11 abgesperrt und das in den Leitungsabschnitten 17 zwischen den Magnetventilen 15 und den Relaisventilen 10 bzw. dem Überlastschutzventil 11 befindliche Fluid entweicht über die Fluidablassöffnungen 16 der Magnetventile 15. Infolgedessen sinkt der Steuerdruck ab.

Nun ist das Druckbeaufschlagen der Federspeicherbremsen 6 über das Überlastschutzventil 11 verhindert und das Rückschlagventil 14 des Überlastschutzventils 11 schließt. Die Relaisventile 10 schalten in eine Ventilstellung, in welcher der Druckentleerungsleitungsabschnitt 13 und die Federspeicherbremsen 6 über die Fluidablässe III druckentleeren. Somit sinkt die auf die Druckfedern der Federspeicherbremsen 6 wirkende Kraft ab und die Federspeicherbremsen 6 beaufschlagen die Räder 4 mit einer Bremskraft. Das Transportfahrzeug 2 wird somit über die Federspeicherbremsen 6 abgebremst.

Zum Wiederaufnehmen des Fahrbetriebs können die Magnetventile 15 wieder mit Strom versorgt werden, wodurch die Fluidzufuhr durch die Magnetventile 15 zu den zwei Relaisventilen 10 und dem Überlastschutzventil 11 ermöglicht ist. Der die zwei Relaisventile 10 und das Überlastschutzventil 11 beaufschlagende Steuerdruck steigt wieder. Die zwei Relaisventile 10 schalten sodann in eine Ventilstellung, in welcher der Druckentleerungsleitungsabschnitt 13 und die Federspeicherbremsen 6 nicht mehr über die Fluidablässe III druckentleeren kann. Das Rückschlagventil 14 des Überlastschutzventils 11 öffnet und das Druckbeaufschlagen der Federspeicherbremsen 6 über das Überlastschutzventil 11 wird wieder ermöglicht. Somit steigt die auf die Druckfedern der Federspeicherbremsen 6 wirkende Kraft wieder an und die Federspeicherbremsen 6 werden gelöst.

Das Überlastschutzventil 11 weist des Weiteren zwei Steueranschlüsse IV auf, die mit einem den Betriebsbremsen 5 zugeordneten Fluidleitungsabschnitt 18 und mit einem der manuellen Betätigungseinrichtung für die Federspeicherbremsen 6 zugeordneten Fluidleitungsabschnitt 19 fluidisch verbunden sind. Durch das Überlastschutzventil 11 kann eine Überbelastung der Radbremsen 5, 6 bei einer gleichzeitigen, insbesondere manuellen, Betätigung der Betriebsbremsen 5 und der Federspeicherbremsen 6 verhindert werden. Die Fluidleitungsabschnitte 18, 19, die den Betriebsbremsen 5 und der manuellen Betätigungseinrichtung für die Federspeicherbremsen 6 zugeordnet sind, sind aus Gründen der Übersichtlichkeit nicht in den Figuren dargestellt.

Zur Erfassen einer manuellen Betätigung der Betriebsbremsen 5 ist in dem den Betriebsbremsen 5 zugeordneten Fluidleitungsabschnitt 18, welcher nicht in Fig. 1 dargestellt ist, ein Drucksensor angeordnet. Im Anschluss an die Erkennung der manuellen Betätigung der Betriebsbremsen 5 können die Magnetventile 15, insbesondere auf ein Signal der Steuereinrichtung 8 hin, wieder durch die Steuereinrichtung 8 mit Strom versorgt, d.h. bestromt, werden. Wie zuvor beschrieben ist, können die Federspeicherbremsen 6 dadurch wieder gelöst werden.

Zum Erfassen eines den Federspeicherbremsen 6 zugeordneten Fluiddrucks weist der Druckentleerungsleitungsabschnitt 13 eine erste Druckerfassungseinrichtung 20, umfassend einen Druckschalter 21, auf. Zum Erfassen des das Überlastschutzventil 11 beaufschlagenden Steuerdrucks, weist das Fluidleitungssystem 1 eine dritte Druckerfassungseinrichtung 22, umfassend einen Druckschalter 21, auf. Dabei ist die dritte Druckerfassungseinrichtung 22 zwischen den dem Überlastschutzventil 11 zugeordneten Magnetventilen 15 und dem Überlastschutzventil 11 angeordnet.

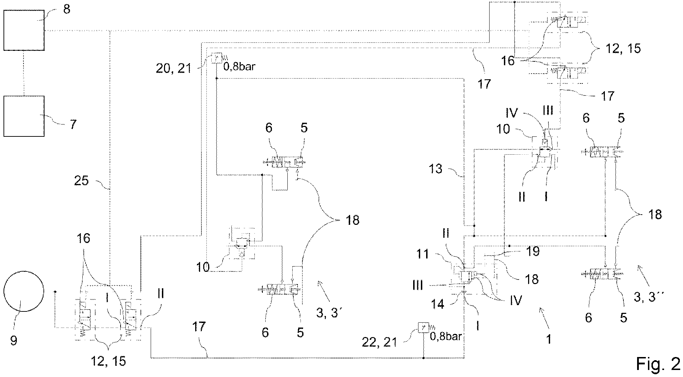

Fig. 2 zeigt in einer schematischen Darstellung ein Fluidleitungssystem eines Transportfahrzeugs gemäß einer weiteren Ausführungsform der vorliegenden Erfindung.

Gegenüber dem in Fig. 1 dargestellten Fluidleitungssystem 1 sind dem an der Vorderradachse 3' positionierten Relaisventil 10 ein Magnetventil 15 und dem an der Hinterradachse 3" positionierten Relaisventil 10 ein weiteres Magnetventil 15 zugeordnet. Dadurch können die Relaisventile 10 durch die Magnetventile 15 getrennt angesteuert werden. Dies ermöglicht es, die Funktionsfähigkeit des Systems, insbesondere ein ordnungsgemäßes Ansteuern des jeweiligen Relaisventils 10 durch das jeweils zugeordnete Magnetventil 15, zu prüfen.

Zur besseren Übersichtlichkeit wird hinsichtlich der weiteren Merkmale des in Fig. 2 dargestellten Fluidleitungssystems 1 auf die voranstehende Beschreibung von Fig. 1 verwiesen.

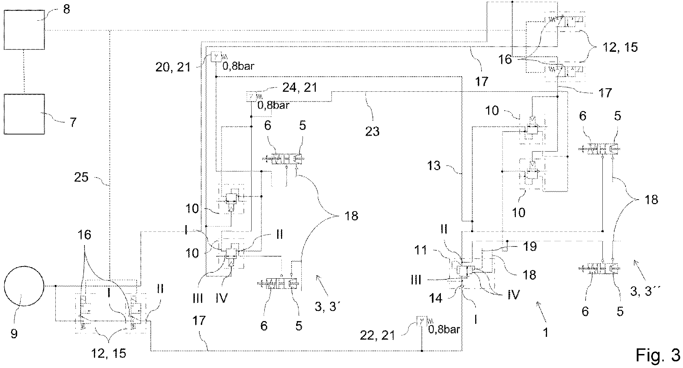

Fig. 3 zeigt in einer schematischen Darstellung ein Fluidleitungssystem eines Transportfahrzeugs gemäß einer weiteren Ausführungsform der vorliegenden Erfindung.

Gegenüber dem in Fig. 2 dargestellten Fluidleitungssystem 1 sind insgesamt vier Relaisventile 10 angeordnet, wobei jeweils zwei Relaisventile 10 an der Vorderradachse 3' und der Hinterradachse 3" angeordnet sind. Zum Erfassen eines den Federspeicherbremsen 6 zugeordneten Fluiddrucks sind die vier Relaisventile 10 an einen Diagnoseleitungsabschnitt 23 des Fluidleitungssystems 1 angeschlossen. Dabei weist der Diagnoseleitungsabschnitt 23 eine zweite Druckerfassungseinrichtung 24, umfassend einen Druckschalter 21, auf. Der Diagnoseleitungsabschnitt 23 ist jeweils über den Fluidversorgungsanschluss I der Relaisventile 10 mit diesen fluidisch verbunden. Anhand des erfassten Fluiddrucks kann die ordnungsgemäße Funktionsfähigkeit der vier Relaisventile 10 und gegebenenfalls des Überlastschutzventils 11 geprüft werden und beurteilt werden, ob die Federspeicherbremsen 6 druckentleert oder druckbeaufschlagt sind.

Zur besseren Übersichtlichkeit wird hinsichtlich der weiteren Merkmale des in Fig. 3 dargestellten Fluidleitungssystems 1 auf die voranstehende Beschreibung von Fig. 2 verwiesen.

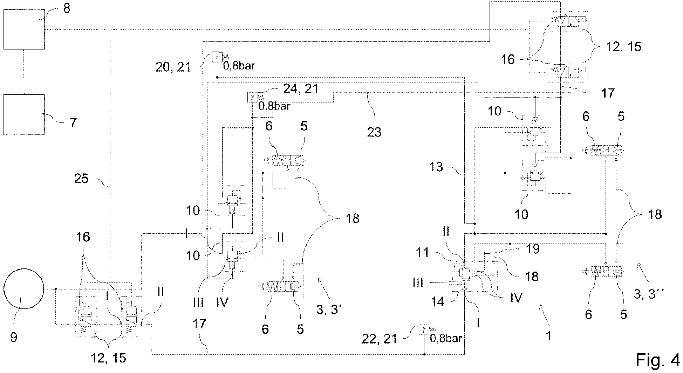

Fig. 4 zeigt in einer schematischen Darstellung ein Fluidleitungssystem eines Transportfahrzeugs gemäß einer weiteren Ausführungsform der vorliegenden Erfindung.

Gegenüber dem in Fig. 3 dargestellten Fluidleitungssystem 1 sind den an der Vorderradachse 3' positionierten Relaisventilen 10 und den an der Hinterradachse 3" positionierten Relaisventilen 10 zwei gemeinsame in Reihe geschaltete Magnetventile 15 zugeordnet. Bei Ausfall eines dieser Magnetventile 15 sind dennoch alle vier Relaisventile 10 durch die übrigen Magnetventile 15 ansteuerbar.

Zur besseren Übersichtlichkeit wird hinsichtlich der weiteren Merkmale des in Fig. 4 dargestellten Fluidleitungssystems 1 auf die voranstehende Beschreibung von Fig. 3 verwiesen.

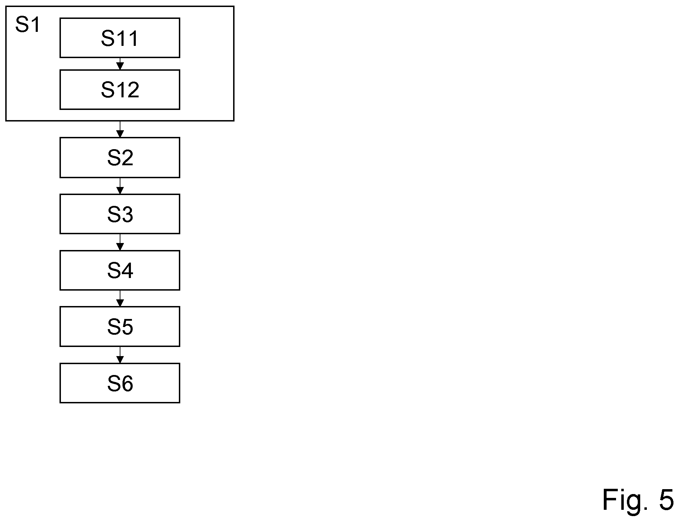

Fig. 5 zeigt Schritte eines Verfahrens gemäß einer Ausführungsform der vorliegenden Erfindung.

Die Schritte betreffen ein Verfahren zum Durchführen eines Bremsmanövers, insbesondere eines Notbremsmanövers, mit einem Transportfahrzeug 2 nach einem der Ansprüche 1 bis 16, insbesondere einem Transportfahrzeug 2 mit einem Fluidleitungssystem 1 gemäß einer der in den Fig. 1 bis 4 dargestellten Ausführungsformen. Das Transportfahrzeug 2 weist einen Umgebungssensor 7 zum Erfassen von Umgebungsdaten und eine Steuereinrichtung 8 auf.

In einem ersten Schritt S1 wird eine Bremssituation durch den Umgebungssensor 7 und die Steuereinrichtung 8 erkannt. Dies umfasst ein Erfassen (S11) eines Hindernisses im Umfeld des Transportfahrzeugs 2 und ein Auswerten (S12) der erfassten Umgebungsdaten hinsichtlich einer Bremssituation durch die Steuereinrichtung 8.

In einem Schritt S2 wird ein den Betriebsbremsen 5 zugeordnetes, elektronisches Bremssystem in dem Bremszustand deaktiviert.

Ein Übermitteln (S3) eines Bremssignals durch die Steuereinrichtung 8 an die Stellgliedeinrichtung 12 erfolgt im Anschluss an das Deaktivieren (S2) des elektronischen Bremssystems. Das Bremssignal entspricht einem Unterbrechen der Stromversorgung der Stellgliedeinrichtung 12.

In einem Schritt S4 werden die zumindest zwei Relaisventile 10 und das zumindest eine Befüllventil 11 durch die Stellgliedeinrichtung 12 mit dem Steuerdruck derart beaufschlagt, dass die Federspeicherbremsen 6 in Schritt S5 über die zumindest zwei Relaisventile 10 druckentleeren und das Druckbeaufschlagen der Federspeicherbremsen 6 in Schritt S6 über das zumindest eine Befüllventil 11 verhindert wird. Das Transportfahrzeug 2 bremst ab.

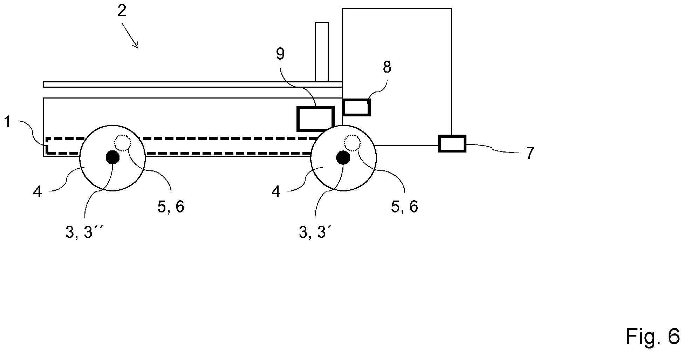

Fig. 6 zeigt in einer schematischen Darstellung eine Seitenansicht eines Transportfahrzeugs 2 gemäß einer Ausführungsform der vorliegenden Erfindung.

Bei diesem Transportfahrzeug 2 kann es sich beispielsweise um einen Wechselbrückenhubwagen handeln. Das Transportfahrzeug 2 weist eine Steuereinrichtung 8 und einen Umgebungssensor 7 auf. Der Umgebungssensor 7, beispielsweise ein Lidar-Sensor, ist an der Transportfahrzeugfront zur Erkennung von Hindernissen im Fahrweg angeordnet.

Des Weiteren umfasst das Transportfahrzeug 2 zwei Achsen 3, umfassend eine Vorderradachse 3' und eine Hinterradachse 3", mit jeweils zwei Rädern 4, wobei jedem der zwei Räder 4 eine Betriebsbremse 5 und eine Federspeicherbremse 6 in Form eines Kombibremszylinders zugeordnet ist. Die Betriebsbremsen 5 und Federspeicherbremsen 6 sind fluidisch mit einem Fluidleitungssystem 1 mit einer Druckluftversorgung 9 verbunden.

Das Transportfahrzeug 2 gemäß Fig. 6 weist insbesondere ein Fluidleitungssystem 1 gemäß einer der Ausführungsformen nach Fig. 1 bis 4 auf.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele des erfindungsgemäßen Transportfahrzeugs und des erfindungsgemäßen Verfahrens lediglich zur Erörterung der beanspruchten Lehre dienen, diese jedoch nicht auf die Ausführungsbeispiele einschränken.

### Bezugszeichenliste

- 1: Fluidleitungssystem
- 2: Transportfahrzeug
- 3: Achse
- 3': Vorderradachse
- 3": Hinterradachse
- 4: Rad
- 5: Betriebsbremse
- 6: Federspeicherbremse
- 7: Umgebungssensor
- 8: Steuereinrichtung
- 9: Fluidversorgung, Druckluftversorgung
- 10: Relaisventil
- 11: Befüllventil, Überlastschutzventil
- 12: Stellgliedeinrichtung
- 13: Druckentleerungsleitungsabschnitt
- 14: Rückschlagventil
- 15: Magnetventil, Stellglied
- 16: Fluidablassöffnung
- 17: Leitungsabschnitt
- 18: Fluidleitungsabschnitt, den Betriebsbremsen zugeordnet
- 19: Fluidleitungsabschnitt, einer manuellen Betätigungseinrichtung für die Federspeicherbremsen zugeordnet
- 20: Erste Druckerfassungseinrichtung
- 21: Druckschalter
- 22: Dritte Druckerfassungseinrichtung
- 23: Diagnoseleitungsabschnitt
- 24: Zweite Druckerfassungseinrichtung
- 25: Drahtleitung
- I: Fluidversorgungsanschluss
- II: Arbeitsanschluss
- III: Fluidablass
- IV: Steueranschluss

## Patentansprüche

1. Transportfahrzeug (2), insbesondere fahrerloses Transportfahrzeug (2), umfassend
zumindest eine Achse (3) mit zwei Rädern (4), wobei jedem der zwei Räder (4) eine Betriebsbremse (5) und eine Federspeicherbremse (6) zugeordnet ist, und ein mit den Betriebsbremsen (5) und den Federspeicherbremsen (6) fluidisch verbundenes Fluidleitungssystem (1) mit einer Fluidversorgung (9), insbesondere einer Druckluftversorgung (9),
wobei das Fluidleitungssystem (1) zumindest zwei Relaisventile (10) zum Druckentleeren der Federspeicherbremsen (6), zumindest ein Befüllventil (11), vorzugsweise ein Relaisventil, insbesondere ein Überlastschutzventil (11), zum Druckbeaufschlagen der Federspeicherbremsen (6) und eine Stellgliedeinrichtung (12) aufweist,
wobei in einem Bremszustand, insbesondere in einem Notbremszustand, die zumindest zwei Relaisventile (10) und das zumindest eine Befüllventil (11) durch die Stellgliedeinrichtung (12) derart mit einem Steuerdruck beaufschlagbar sind, dass die Federspeicherbremsen (6) über die zumindest zwei Relaisventile (10) druckentleerbar sind und ein Druckbeaufschlagen der Federspeicherbremsen (6) über das zumindest eine Befüllventil (11) verhinderbar ist.

2. Transportfahrzeug (2) nach Anspruch 1, **dadurch gekennzeichnet, dass** die Stellgliedeinrichtung (12) zwischen der Fluidversorgung (9) und den zumindest zwei Relaisventilen (10) sowie zwischen der Fluidversorgung (9) und dem zumindest einen Befüllventil (11) angeordnet ist.

3. Transportfahrzeug (2) nach Anspruch 1 oder 2, **dadurch gekennzeichnet, dass** der Steuerdruck durch die Stellgliedeinrichtung (12) zum Druckentleeren und zum Verhindern des Druckbeaufschlagens der Federspeicherbremsen (6) unter einen Grenzwert, insbesondere auf 0 bar bzw. Umgebungsdruck, absenkbar und zum Druckbeaufschlagen der Federspeicherbremsen (6) über den Grenzwert anhebbar ist.

4. Transportfahrzeug (2) nach Anspruch 3, **dadurch gekennzeichnet, dass** die Stellgliedeinrichtung (12) zum Absenken des Steuerdrucks stromlos schaltbar und zum Anheben des Steuerdrucks bestrombar ist.

5. Transportfahrzeug (2) nach einem der Ansprüche 1 bis 4, **dadurch gekennzeichnet, dass** die Stellgliedeinrichtung (12) mehrere Stellglieder (15), insbesondere elektronisch steuerbare Magnetventile (15), vorzugsweise mit einer Fluidablassöffnung (16), umfasst.

6. Transportfahrzeug (2) nach Anspruch 5, **dadurch gekennzeichnet, dass** den zumindest zwei Relaisventilen (10) und/oder dem zumindest einen Befüllventil (11) jeweils zumindest ein Stellglied (15), vorzugsweise jeweils zwei in Reihe geschaltete Stellglieder (15), zugeordnet sind.

7. Transportfahrzeug (2) nach einem der Ansprüche 1 bis 6, **dadurch gekennzeichnet, dass** die zumindest zwei Relaisventile (10), das zumindest eine Befüllventil (11) und die Federspeicherbremsen (6) über einen Druckentleerungsleitungsabschnitt (13) des Fluidleitungssystems (1) fluidisch verbunden sind.

8. Transportfahrzeug (2) nach Anspruch 7, **dadurch gekennzeichnet, dass** zum Erfassen eines den Federspeicherbremsen (6) zugeordneten Fluiddrucks der Druckentleerungsleitungsabschnitt (13) eine erste Druckerfassungseinrichtung (20), insbesondere umfassend zumindest einen Druckschalter (21) und/oder zumindest einen Drucksensor, aufweist.

9. Transportfahrzeug (2) nach einem der Ansprüche 1 bis 8, **dadurch gekennzeichnet, dass** zum Erfassen eines den Federspeicherbremsen (6) zugeordneten Fluiddrucks die zumindest zwei Relaisventile (10) an einen Diagnoseleitungsabschnitt (23) des Fluidleitungssystems (1) angeschlossen sind, wobei der Diagnoseleitungsabschnitt (23) eine zweite Druckerfassungseinrichtung (24), insbesondere umfassend zumindest einen Druckschalter (21) und/oder zumindest einen Drucksensor, aufweist.

10. Transportfahrzeug (2) nach einem der Ansprüche 1 bis 9, **dadurch gekennzeichnet, dass** zum Erfassen des Steuerdrucks, insbesondere des zumindest einen Befüllventils (11), das Fluidleitungssystem (1) eine dritte Druckerfassungseinrichtung (22), insbesondere umfassend zumindest einen Druckschalter (21) und/oder zumindest einen Drucksensor, aufweist, wobei die dritte Druckerfassungseinrichtung (22) zwischen der Stellgliedeinrichtung (12) und dem zumindest einen Befüllventil (11) angeordnet ist.

11. Transportfahrzeug (2) nach einem der Ansprüche 1 bis 10, **dadurch gekennzeichnet, dass** die zumindest zwei Relaisventile (10) derart angeschlossen sind, dass die Federspeicherbremsen (6) über die zumindest zwei Relaisventile (10) nicht druckbeaufschlagbar sind, und/oder
dass zumindest zwei Achsen (3), umfassend eine Vorder- und eine Hinterradachse (3', 3"), mit jeweils zwei Rädern (4) angeordnet sind, wobei jedem Rad (4) eine Betriebsbremse (5) und eine Federspeicherbremse (6) zugeordnet ist.

12. Transportfahrzeug (2) nach einem der Ansprüche 1 bis 11, **dadurch gekennzeichnet, dass** die Betriebsbremse (5) und die Federspeicherbremse (6) je Rad (4) als eine Bremszylindereinheit, insbesondere als Kombibremszylinder, ausgeführt sind und/oder,
dass ein den Betriebsbremsen (5) zugeordnetes, elektronisches Bremssystem in dem Bremszustand deaktiviert ist.

13. Transportfahrzeug (2) nach einem der Ansprüche 1 bis 12, **dadurch gekennzeichnet, dass** das Transportfahrzeug (2) mindestens einen Umgebungssensor (7) zum Erfassen von Umgebungsdaten und eine Steuereinrichtung (8) aufweist.

14. Verfahren zum Durchführen eines Bremsmanövers, insbesondere eines Notbremsmanövers, mit einem Transportfahrzeug (2) nach einem der Ansprüche 1 bis 13, wobei das Transportfahrzeug (2) mindestens einen Umgebungssensor (7) zum Erfassen von Umgebungsdaten und eine Steuereinrichtung (8) aufweist, mit den Schritten:
- Erkennen (S1) einer Bremssituation durch den mindestens einen Umgebungssensor (7) und die Steuereinrichtung (8);
- Übermitteln (S3) eines Bremssignals durch die Steuereinrichtung (8) an die Stellgliedeinrichtung (12);
- Beaufschlagen (S4) der zumindest zwei Relaisventile (10) und des zumindest einen Befüllventils (11) mit dem Steuerdruck durch die Stellgliedeinrichtung (12);
- Druckentleeren (S5) der Federspeicherbremsen (6) über die zumindest zwei Relaisventile (10);
- Verhindern (S6) des Druckbeaufschlagens der Federspeicherbremsen (6) über das zumindest eine Befüllventil (11).

15. Verfahren zum Durchführen eines Bremsmanövers nach Anspruch 14, **dadurch gekennzeichnet, dass** ein den Betriebsbremsen (5) zugeordnetes, elektronisches Bremssystem in dem Bremszustand, insbesondere vor dem Übermitteln (S3) des Bremssignals durch die Steuereinrichtung (8) an die Stellgliedeinrichtung (12), deaktiviert wird (S2).
